# DEMANDE DE BREVET EUROPEEN

(11) **EP 3 694 091 A1**
(43) Date de publication de la demande: **12.08.2020**
(21) Numéro de dépôt: 20156550.4
(22) Date de dépôt: 11.02.2020
(51) Int. Cl.: H02M 1/32, H02H 3/42, H02H 7/12, H02M 7/5387, H02M 1/00

(54) **PROCÉDÉ ET SYSTÈME DE PROTECTION D'UN CIRCUIT D'ALIMENTATION ÉLECTRIQUE**

(30) Priorité: 11.02.2019 FR 1901326
(71) Demandeur: ALSTOM Transport Technologies, 93400 Saint-Ouen (FR); SNCF Voyageurs, 93200 Saint-Denis (FR)
(72) Inventeur: BLANC, Sebastien, 65420 Ibos (FR)
(74) Mandataire: Lavoix

(57) **Abrégé**

L'invention concerne un procédé et système de protection d'un circuit d'alimentation électrique comprenant un premier convertisseur (8) de tension électrique continue adapté à abaisser une tension moyenne connecté à un deuxième convertisseur (24) adapté à délivrer trois phases de tension électrique alternatives à partir d'une tension continue, le deuxième convertisseur (24) étant protégé par un dispositif de protection (28) en sur-intensité adapté à entraîner un débranchement du deuxième convertisseur lorsque l'intensité du courant électrique dépasse un seuil de protection en sur-intensité, le deuxième convertisseur (24) étant connecté à au moins une charge (6a, 6b), la connexion comportant un dispositif de disjonction thermique. Le procédé comporte, suite à un déclenchement du dispositif de protection (28) en sur-intensité du deuxième convertisseur, un arrêt du premier convertisseur, une remise en fonctionnement (56) du deuxième convertisseur, et ensuite, une remise en fonctionnement du premier convertisseur, le premier convertisseur ayant un niveau de courant de sortie, avec une limitation du niveau de courant de sortie à un niveau maximal inférieur au seuil de protection en sur-intensité.

## Description

La présente invention concerne un procédé de protection d'un circuit d'alimentation électrique et un système de protection de circuit électrique associé.

L'invention se situe dans le domaine de l'alimentation et de la protection de circuits d'alimentation électrique. Elle trouve notamment une application privilégiée dans l'alimentation électrique de véhicules ferroviaires.

En particulier, l'invention se situe dans le contexte de la protection de circuits d'alimentation électrique du type comprenant un premier convertisseur de tension électrique continue adapté à abaisser une tension moyenne connecté à un deuxième convertisseur adapté à délivrer trois phases de tension électrique alternatives à partir d'une tension continue. Le deuxième convertisseur est protégé par un dispositif de protection en sur-intensité adapté à entraîner un débranchement du deuxième convertisseur lorsque l'intensité du courant électrique dépasse un seuil de protection en sur-intensité, et est connecté pour alimenter au moins une charge, la connexion comportant un dispositif de disjonction thermique.

Dans un tel circuit, en cas de défaut d'une des charges alimentées, le dispositif de protection en sur-intensité du deuxième convertisseur, couramment appelé onduleur, se déclenche plus rapidement que le dispositif de disjonction thermique associé à la charge. C'est notamment le cas lorsque le dispositif de protection en sur-intensité est un disjoncteur à semi-conducteurs.

Dans un système dans lequel l'onduleur est remis en fonctionnement après vérification, tant que la charge en défaut n'est pas débranchée, le dispositif de protection en sur-intensité se déclenche à nouveau, ce qui a pour effet de couper l'alimentation électrique triphasée à cause du défaut ponctuel d'une des charges, qui peut par exemple être une charge auxiliaire.

Ainsi, par exemple, dans le cas d'un système d'alimentation électrique de véhicule ferroviaire, un tel système induit une coupure de l'alimentation en énergie électrique triphasée d'un moteur du véhicule, par exemple à cause d'une défaillance de charge auxiliaire.

Il est souhaitable d'éviter une telle situation de coupure d'alimentation électrique.

A cet effet, l'invention propose un procédé de protection de circuit d'alimentation électrique comprenant un premier convertisseur de tension électrique continue adapté à abaisser une tension moyenne connecté à un deuxième convertisseur adapté à délivrer trois phases de tension électrique alternatives à partir d'une tension continue, le deuxième convertisseur étant protégé par un dispositif de protection en sur-intensité adapté à entraîner un débranchement du deuxième convertisseur lorsque l'intensité du courant électrique dépasse un seuil de protection en sur-intensité, le deuxième convertisseur étant connecté à au moins une charge, la connexion comportant un dispositif de disjonction thermique.

Le procédé comporte, suite à un déclenchement du dispositif de protection en sur-intensité du deuxième convertisseur, des étapes de :
- arrêt du premier convertisseur,
- remise en fonctionnement du deuxième convertisseur,
- remise en fonctionnement du premier convertisseur, le premier convertisseur ayant un niveau de courant de sortie, avec une limitation du niveau de courant de sortie à un niveau maximal inférieur au seuil de protection en sur-intensité.

Avantageusement, le procédé de protection proposé permet de maintenir en fonctionnement le deuxième convertisseur en limitant le niveau de courant de sortie du premier convertisseur à un niveau maximal inférieur au seuil de protection en sur-intensité. Par conséquent, un nouveau déclenchement du dispositif de protection en sur-intensité est évité, et le dispositif de disjonction thermique est à même alors d'effectuer la déconnexion de la charge en défaut.

Le procédé de protection selon l'invention peut présenter une ou plusieurs des caractéristiques ci-dessous, prises indépendamment ou dans toutes leurs combinaisons techniquement acceptables.

La remise en fonctionnement du deuxième convertisseur est effectuée avec un taux de modulation prédéterminé.

Le procédé comporte, suite à l'arrêt du premier convertisseur, la mise en oeuvre d'un circuit de déchargement comportant un thyristor, et une ouverture dudit thyristor avant remise en fonctionnement du deuxième convertisseur.

Selon un autre aspect, l'invention a pour objet un système de protection d'un circuit d'alimentation électrique comprenant un premier convertisseur de tension électrique continue adapté à abaisser une tension moyenne connecté à deuxième convertisseur adapté à délivrer trois phases de tension électrique alternatives à partir d'une tension continue, le deuxième convertisseur étant protégé par un dispositif de protection en sur-intensité adapté à entraîner un débranchement du deuxième convertisseur lorsque l'intensité du courant dépasse un seuil de protection en sur-intensité, le deuxième convertisseur étant connecté à au moins une charge, la connexion comportant un dispositif de disjonction thermique.

Le système comportant un module de contrôle adapté à mettre en œuvre, suite à un déclenchement du dispositif de protection en sur-intensité du deuxième convertisseur des commandes de :
- arrêt du premier convertisseur,
- remise en fonctionnement du deuxième convertisseur,
- remise en fonctionnement du premier convertisseur, le premier convertisseur ayant un niveau de courant de sortie, avec une limitation du niveau de courant de sortie à un niveau maximal inférieur au seuil de protection en sur-intensité.

Enfin, l'invention concerne également un véhicule ferroviaire comportant un système de protection tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- [Fig 1] la figure 1 illustre schématiquement un système d'alimentation électrique comprenant un circuit d'alimentation et un système de protection selon un mode de réalisation ;
- [Fig 2] la figure 2 est un synoptique des principales étapes d'un procédé de protection de circuit électrique selon un mode de réalisation.

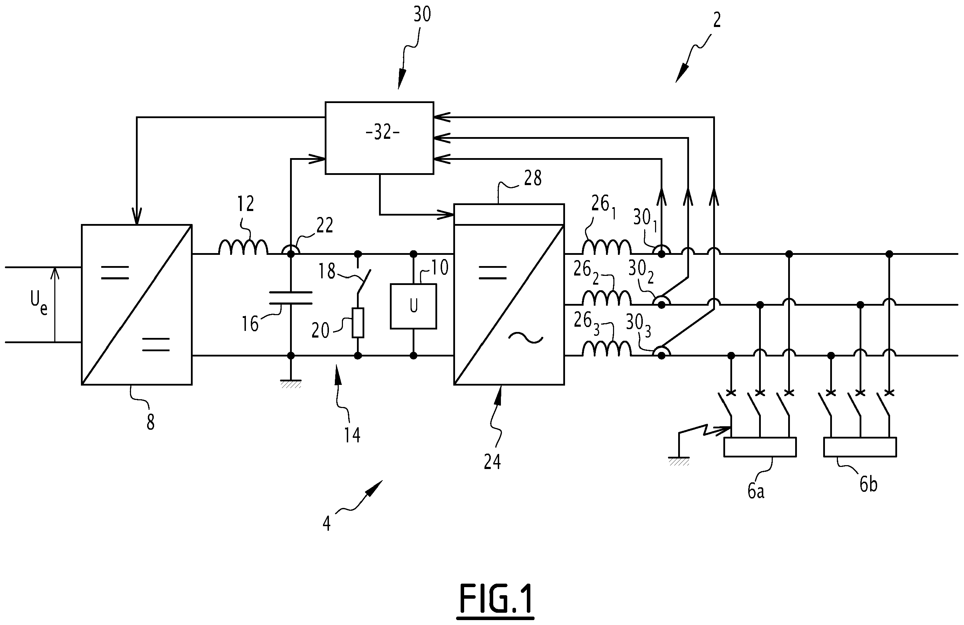

La figure 1 illustre une partie d'un système d'alimentation électrique 2, par exemple d'un véhicule ferroviaire non illustré.

L'invention s'applique néanmoins dans d'autres domaines d'application.

Le système d'alimentation 2 comporte un circuit d'alimentation électrique 4 d'une pluralité de charges 6a, 6b. Seulement deux charges sont représentées à titre d'illustration schématique, mais il est clair que le nombre de charges n'est pas limité.

Le circuit d'alimentation électrique 4 comporte un premier convertisseur de tension électrique continue, ou convertisseur DC/DC 8, qui est du type abaisseur de tension.

Le convertisseur DC/DC 8 est adapté à abaisser la tension moyenne de sortie par rapport à la tension moyenne d'entrée Ue. La source de tension Ue n'est pas représentée. Un tel convertisseur DC/DC fonctionne sur la base d'une régulation de tension entre tension d'entrée et tension de sortie.

La tension moyenne de sortie est par exemple mesurée par un capteur de mesure 10.

En sortie du premier convertisseur 8 est branchée une inductance 12, et un circuit de déchargement 14 comportant deux branches parallèles, la première branche comportant un condensateur 16, et la deuxième branche comportant un thyristor 18 et une résistance 20.

Un capteur de courant 22 est adapté à mesurer le niveau de courant électrique en sortie de l'inductance 12.

Le circuit d'alimentation électrique 4 comporte également un deuxième convertisseur 24 de type continu vers alternatif, ou convertisseur DC/AC, adapté à convertir une tension continue d'entrée en tension alternative triphasée en sortie.

Trois branches correspondant respectivement aux trois phases de sortie sont représentées sur la figure 1, une inductance 26₁, 26₂, 26₃ étant branchée sur chaque phase.

Il n'y a pas d'isolation galvanique entre le premier convertisseur 8 et le deuxième convertisseur 24.

Le deuxième convertisseur 24 comporte un dispositif de protection en sur-intensité 28, représenté schématiquement à la figure 1.

Par exemple, le dispositif de protection 28 est un disjoncteur à semi-conducteurs.

Lorsqu'une sur-intensité, c'est-à-dire une intensité de courant supérieure à un seuil de protection en sur-intensité I_{Seuil} prédéterminé, est détectée sur une des phases, grâce à des capteurs de courant 30₁, 30₂, 30₃ associés, adaptés à mesurer l'intensité du courant, le dispositif de protection 28 déclenche la protection en sur-intensité et le deuxième convertisseur 24 est déconnecté du circuit d'alimentation électrique 4.

Tel est par exemple le cas lorsqu'une des charges 6a, 6b est en défaut d'isolement, par exemple en court-circuit.

Le système d'alimentation 2 comprend également un système de protection 30 selon un mode de réalisation de l'invention.

Le système de protection 30 comprend notamment un module de contrôle 32, comportant au moins un processeur et adapté à exécuter des instructions de code pour effectuer des calculs. De plus, le module de contrôle 32 comporte une unité de mémoire adaptée à mémoriser des données et des paramètres. En particulier, le module de contrôle 32 mémorise la valeur de seuil de protection en sur-intensité I_{Seuil}, qui est le seuil de déclenchement du dispositif de protection 28.

Le module de contrôle 32 reçoit les mesures d'intensité de courant électrique fournies respectivement par les capteurs 22 et 30₁,30₂, 30₃.

Ce module 32 est adapté à commander le fonctionnement du premier convertisseur 8 et du deuxième convertisseur 24.

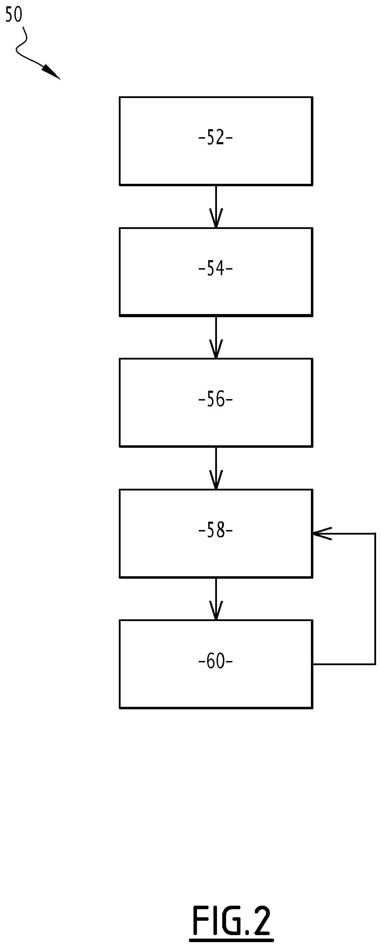

Le module de contrôle 32 met en œuvre le procédé de protection, dont les principales étapes dans un mode de réalisation sont décrites ci-après en référence à la figure 2.

Le procédé de protection de circuit d'alimentation 50 commence lors de la détection 52 du déclenchement du dispositif 28 de protection en sur-intensité du deuxième convertisseur 24. Le déclenchement est par exemple dû à un défaut isolement sur une des charges alimentées par le circuit d'alimentation.

Par exemple, sur la figure 1 on a représenté schématiquement un défaut entre une phase et la masse affectant la charge 6a.

Suite à la détection 52 du déclenchement du dispositif de protection, le module de contrôle 32 commande à l'étape 54 l'arrêt du premier convertisseur 8.

Suite à cet arrêt, le condensateur 12 est déchargé quasi instantanément via le circuit de déchargement 14 et notamment via la résistance 20 grâce à la fermeture du thyristor 18. Le thyristor 18 du circuit de déchargement 14 est ensuite ouvert.

Le module de contrôle 32 commande ensuite la remise en fonctionnement 56 du deuxième convertisseur 24, avec des paramètres de fonctionnement nominaux, par exemple en modulation de largeur d'amplitude à taux de modulation de valeur fixe.

Il est à noter qu'au moment de la remise en fonctionnement du deuxième convertisseur 24, le premier convertisseur 8 est à l'arrêt, et donc le deuxième convertisseur 24 ne reçoit pas de courant électrique en entrée.

Le module de contrôle 32 commande ensuite à l'étape 58 une remise en fonctionnement du premier convertisseur 8, avec limitation du niveau de courant de sortie du premier convertisseur grâce aux mesures de courant fournies par le capteur 22. Le courant de sortie est limité à un niveau maximal inférieur au seuil de protection en sur-intensité.

Dans un mode de réalisation, la limitation 60 de courant est effectuée par surveillance du niveau de courant fourni par le capteur 22 et ré-ajustement du niveau de sortie du premier convertisseur 8.

Ainsi, le niveau de sortie de courant est contrôlé pour rester inférieur au seuil de protection en sur-intensité I_{Seuil}, afin d'éviter le déclenchement du dispositif de protection 28.

Avantageusement, le deuxième convertisseur 24 est alimenté en courant électrique et le dispositif 28 de protection en sur-intensité n'est pas déclenché.

Le défaut d'isolement ayant provoqué le déclenchement initial du dispositif de protection étant présent, le dispositif de disjonction thermique associé à la charge en défaut est déclenché et provoque une ouverture du circuit et une isolation de la charge 6a en défaut.

Avantageusement, le déclenchement du dispositif de disjonction thermique associé à la charge en défaut est détecté via une mesure de tension au niveau de chaque phase ou une mesure de la tension faite par le capteur de mesure 10, et correspond à une augmentation de ladite tension. Avantageusement encore, à la suite de la détection du déclenchement du dispositif de disjonction thermique associé à la charge en défaut le module de contrôle 32 est propre à supprimer la limitation du niveau de courant de sortie du premier convertisseur et à modifier la commande du deuxième convertisseur 24.

Avantageusement, le procédé de protection permet d'éviter que le dispositif de protection en sur-intensité du deuxième convertisseur ne se déclenche à nouveau avant le déclenchement du dispositif de protection de la charge en défaut.

Avantageusement, la charge en défaut est isolée sans perturber le fonctionnement de la totalité du circuit d'alimentation, tout en permettant un pilotage classique de type modulation à largeur d'amplitude du deuxième convertisseur.

## Revendications

1. Procédé de protection d'un circuit d'alimentation électrique comprenant un premier convertisseur de tension électrique continue adapté à abaisser une tension moyenne et connecté à un deuxième convertisseur adapté à délivrer trois phases de tension électrique alternatives à partir d'une tension continue, le deuxième convertisseur étant protégé par un dispositif de protection en sur-intensité adapté à entraîner un débranchement du deuxième convertisseur lorsque l'intensité du courant électrique dépasse un seuil de protection en sur-intensité,
le deuxième convertisseur étant connecté à au moins une charge, via une connexion comportant un dispositif de disjonction thermique,
le procédé comportant, suite à un déclenchement (52) du dispositif de protection en sur-intensité du deuxième convertisseur, des étapes de :
- arrêt (54) du premier convertisseur,
- remise en fonctionnement (56) du deuxième convertisseur,
- remise en fonctionnement (58) du premier convertisseur, le premier convertisseur ayant un niveau de courant de sortie, avec une limitation (60) du niveau de courant de sortie à un niveau maximal inférieur au seuil de protection en sur-intensité.

2. Procédé selon la revendication 1, dans lequel la remise en fonctionnement (56) du deuxième convertisseur est effectuée avec un taux de modulation prédéterminé.

3. Procédé selon l'une des revendications 1 ou 2, comportant, suite à l'arrêt (54) du premier convertisseur, la mise en œuvre d'un circuit de déchargement comportant un thyristor, et une ouverture dudit thyristor avant remise en fonctionnement du deuxième convertisseur.

4. Système de protection d'un circuit d'alimentation électrique comprenant un premier convertisseur (8) de tension électrique continue adapté à abaisser une tension moyenne et connecté à deuxième convertisseur (24) adapté à délivrer trois phases de tension électrique alternatives à partir d'une tension continue, le deuxième convertisseur (24) étant protégé par un dispositif de protection (28) en sur-intensité adapté à entraîner un débranchement du deuxième convertisseur lorsque l'intensité du courant dépasse un seuil de protection en sur-intensité,
le deuxième convertisseur (24) étant connecté à au moins une charge (6a, 6b), via une connexion comportant un dispositif de disjonction thermique,
le système comportant un module de contrôle (32) adapté à mettre en œuvre, suite à un déclenchement du dispositif de protection (28) en sur-intensité du deuxième convertisseur (24) des commandes de :
- arrêt du premier convertisseur (8),
- remise en fonctionnement du deuxième convertisseur (24),
- remise en fonctionnement du premier convertisseur (8), le premier convertisseur (8) ayant un niveau de courant de sortie, avec une limitation du niveau de courant de sortie à un niveau maximal inférieur au seuil de protection en sur-intensité.

5. Système de protection selon la revendication 4, comprenant en outre un capteur de courant (22) adapté à mesurer le niveau de courant en sortie du premier convertisseur.

6. Système de protection selon l'une des revendications 4 ou 5, comportant en outre un circuit de déchargement (14) comportant un condensateur (16) branché sur une première branche, et une deuxième branche, parallèle à ladite première branche et comportant un thyristor (18) et une résistance (20) branchés en série, le circuit de déchargement (14) étant branché en sortie du premier convertisseur (8), ledit thyristor (18) étant propre à être fermé suite à l'arrêt du premier convertisseur (8) jusqu'au déchargement dudit condensateur (16), puis ouvert.

7. Système de protection selon l'une des revendications 4 à 6, dans lequel le module de contrôle (32) est adapté à remettre en fonctionnement le deuxième convertisseur (24) avec un taux de modulation prédéterminé.

8. Système de protection selon l'une des revendications 4 à 7, mis en œuvre dans un système d'alimentation électrique (2) de véhicule ferroviaire.

9. Véhicule ferroviaire **caractérisé en ce qu'**il comporte un système de protection conforme aux revendications 4 à 8.
